# EUROPÄISCHE PATENTSCHRIFT

(11) **EP 3 108 173 B1**
(45) Veröffentlichungstag und Bekanntmachung des Hinweises auf die Patenterteilung: **22.05.2019**
(21) Anmeldenummer: 14814836.4
(22) Anmeldetag: 16.12.2014
(51) Int. Cl.: F21K 99/00, F21V 3/00, F21V 19/00, F21Y 101/00, F21Y 103/00

(54) **HALBLEITER-RÖHRENLAMPE, ROHR DAFÜR UND HERSTELLUNGSVERFAHREN**
LED LIGHT TUBE, AND REALIZATION METHOD
TUBE A LED, ET MÉTODE DE RÉALISATION

(30) Priorität: 14.02.2014 DE 102014202759
(43) Veröffentlichungstag der Anmeldung: 28.12.2016
(73) Patentinhaber: LEDVANCE GmbH, 85748 Garching (DE)
(72) Erfinder: ENGEL, Andreas, 86856 Hiltenfingen (DE); SCHMIDT, Reinhold, 86179 Augsburg (DE); WIRTH-SCHÖN, Joachim, 89312 Günzburg (DE)
(74) Vertreter: Schulz, Oliver Frank Michael
(86) Internationale Anmeldenummer: PCT/EP2014/077916
(87) Internationale Veröffentlichungsnummer: WO 2015/120929

(56) Entgegenhaltungen:
- WO-A1-2013/056516
- WO-A2-2012/063174
- JP-A- S62 150 893
- JP-A- 2005 327 568
- US-A- 3 098 945
- US-A1- 2010 102 730
- US-A1- 2012 008 314
- US-A1- 2012 099 302
- US-A1- 2013 093 359

## Beschreibung

Die Erfindung betrifft ein Rohr für eine Halbleiter-Röhrenlampe, wobei das Rohr innenseitig mindestens einen Halterungsvorsprung zur Halterung einer Leiterplatte aufweist. Die Erfindung betrifft ferner eine Halbleiter-Röhrenlampe mit einem solchen Rohr sowie mit einer bestückten Leiterplatte, die in dem Rohr untergebracht ist und quer zu der Längsrichtung des Rohrs formschlüssig gehaltert ist. Die Erfindung betrifft auch ein Verfahren zum Herstellen eines solchen Rohrs. Die Erfindung ist insbesondere anwendbar auf LED-Retrofitlampen für Leuchtstofflampen, insbesondere zum Ersatz herkömmlicher Röhrenlampen oder Stablampen vom Typ T5 oder T8.

EP 1 813 857 A1 offenbart eine Lichtquelle. Die Lichtquelle weist eine lineare Anordnung von gehäusten LEDs, sowie einen stabförmigen Körper aus optisch transparentem Material auf. Dieser besitzt eine äußere Oberfläche mit einem im Querschnitt konvexen Abschnitt und einer sich entlang des stabförmigen Körpers erstreckenden Aussparung, in der sich die lineare Anordnung befindet, so dass der stabförmige Körper jedes Gehäuse mindestens teilweise umgibt. Von den gehäusten LEDs abgestrahltes Licht breitet sich im optisch transparenten Material aus, wobei der konvexe Abschnitt der Oberfläche als Zylinderlinse wirkt. Eine äußere Hülle kann schützend und unter Umständen auch stabilisierend den stabförmigen Körper und die lichterzeugenden Elemente umschließen.

WO 2012/063174 A2 offenbart eine Beleuchtungsvorrichtung, die ein langgestrecktes und lichtdurchlässiges sowie mit einem Lichtdiffusor ausgerüstetes Rohr, an den Enden des Rohrs angeordnete elektrische Kontakten, und ein langgestrecktes Festkörper-Leuchtelement, das sich entlang des Rohrs erstreckt und mit den elektrischen Kontakten verbunden ist, aufweist. Das Festkörper-Leuchtelement ist an einer Außenfläche des Rohrs angebracht und emittiert Licht durch das Rohr.

WO 2013/056516 A1 offenbart eine Beleuchtungsvorrichtung, die eine Lichtquelle mit einer Hauptemissionsrichtung nach vorne und eine Hülle, in welcher die Lichtquelle angeordnet ist, aufweist. Die Hülle weist einen lichtstreuenden oberen Abschnitt auf, um einen Teil des Lichts von der Lichtquelle relativ zu der Hauptemissionsrichtung seitlich und nach hinten zu reflektieren und einen anderen Teil hindurchzulassen. Die Lichtintensitätsverteilung der Beleuchtungseinrichtung ist gleichmäßiger, da die nach hinten gerichtete und die seitliche Lichtintensität erhöht werden.

US 2009/0290334 A1 offenbart eine LED-Retrofit-Lichtquelle, die so aufgebaut ist, dass eine Gesamtheit eines radial äußeren Abschnitts eines rohrförmigen Gehäuses mindestens teilweise mittels eines hochgradig dielektrischen, lichtdurchlässigen Materials definiert ist. Das Ausbilden eines solchen Abschnitts verhindert, dass eine handhabende Person aufgrund einer kapazitiven Kopplung einen Stromstoß erleidet, wenn ein Ende der LED-Retrofit-Lichtquelle installiert wird. Eine Leiterplatte steht in wärmeleitender Beziehung mit dem rohrförmigen Gehäuse, so dass eine Ableitung von Wärme von den LEDs von einer den LEDs gegenüberliegenden Seite der Leiterplatte an die Umgebung erreicht wird.

US 2010/0265693 A1 offenbart eine LED-Beleuchtungsvorrichtung, die als Innenbeleuchtung oder Anzeigenbeleuchtung verwendet werden kann. Die LED-Beleuchtungsvorrichtung umfasst ein rohrartiges optisches Gehäuse mit einer Lichtaustrittsfläche und einer LED-Anordnung in dem optischen Gehäuse. Die Lichtemissionsfläche weist eine Tallinie, eine erste innere Rippe und eine zweite innere Rippe auf, die an gegenüberliegenden Seiten der Tallinie angeordnet sind. Die LED-Anordnung enthält eine Vielzahl von LEDs, deren Mittelpunkte entlang der Tallinie angeordnet sind.

US 2010/0321921 A1 offenbart Ausführungsformen von Retrofit- oder Ersatzlampen für konventionelle Leuchtstoffröhren zum Einsatz in einer herkömmlichen Leuchtstofflampe. Eine Ausführungsform umfasst ein röhrenförmiges Gehäuse, eine Leiterplatte, die innerhalb des Gehäuses angeordnet ist, ein Paar Endkappen an gegenüberliegenden Enden des rohrförmigen Gehäuses mit mindestens einem Stiftkontakt und eine Anordnung von LEDs, die in Längsrichtung entlang der Leiterplatte angeordnet sind, wobei eine Zahl und ein Abstand der LEDs gleichförmig und vollständig einen Raum zwischen den Endkappen einnimmt, wobei mindestens ein Stiftkontakt elektrisch mit den LEDs in Kontakt steht und wobei ein Wellenlängen-Konversionsmaterial an wenigstens einem Abschnitt des rohrförmiges Gehäuse vorhanden ist.

US 2011/0267805 A1 offenbart eine hohle, flüssigkeitsgekühlte und streifenförmige LED-Lampe, umfassend ein LED-Treiber, eine LED-Lichtquelle, ein LED-Substrat, einen Lichtverteilungsschirm, elektrische Anschlüsse an den beiden Enden und eine Lampenfassung. In dem Lichtverteilungsschirm ist ein hohler Innenbehälter eingestellt. Der Hohlraum zwischen dem hohlen Innenbehälter und dem Lichtverteilungsschirm ist mit wärmeleitender Flüssigkeit gefüllt. Das LED-Substrat ist in der wärmeleitenden Flüssigkeit eingetaucht. Die LED-Lampe leitet die Wärme durch die Flüssigkeit ab, die eine gute Wärmeabstrahlung erzielt. Zudem bilden der Innenbehälter und der Lichtverteilungsschirm eine Hohlschale, die mit hochgradig wärmeleitender Flüssigkeit gefüllt ist, und die Hohlschale kann aus leichten Materialien hergestellt werden.

US 2011/0317410 A1 offenbart eine LED-Beleuchtungsvorrichtung, die ein Substrat, eine dem Substrat zugewandte Hülle, und mindestens eine auf dem Substrat angeordnete LED aufweist. Das Substrat weist eine erste Oberfläche auf. Die erste Oberfläche weist eine installierte Oberfläche und eine konvexe Oberfläche, die mit der installierten Oberfläche verbunden ist, auf. Die Hülle enthält einen Lichtemissionsabschnitt, welcher der ersten Oberfläche des Substrats zugewandt ist. Die zumindest eine LED ist auf der installierten Fläche des Substrats angeordnet. Ein Teil des von der wenigstens einen LED emittierten Lichts wird durch die konvexe Oberfläche der ersten Oberfläche des Substrats reflektiert und läuft durch die Hülle zu einer Außenseite.

US 2012/0099302 A1 offenbart eine LED-Lampe, die aufweist: ein LED-Modul mit mindestens einer LED-Leiterplatte und einer Vielzahl von LEDs, die auf der LED-Leiterplatte angeordnet sind, eine Abdeckung, die das LED-Modul abdeckt, und ein Paar von Basen, die jeweils mit einem Ende der Abdeckung verbunden sind. Die jeweilige Basis umfasst: eine Kappe, die an einem Ende der Abdeckung angebracht ist, einen Stiftabschnitt zum Anlegen von Elektrizität an das LED-Modul, einen Befestigungsabschnitt, der ein unteres Ende des Stiftabschnitts umgibt, um ihn zu befestigen, und einen Schutz, der ausgebildet ist, um höher als ein Ende des Stiftabschnitts zu sein und der den Stiftabschnitt entlang einer Umfangsrichtung umschließt.

US 2013/0093359 A1 offenbart eine Beleuchtungsvorrichtung, die ein Rohr, einen isolierenden Körper, ein erstes Schaltungssubstrat und eine Vielzahl von ersten Leuchtdioden aufweist. Mindestens ein Teil des Rohres ist lichtdurchlässig. Der isolierende Körper ist in dem Rohr angeordnet und weist eine erste Oberfläche und eine zweite Oberfläche, die der ersten Oberfläche entgegengesetzt ist, auf. Das erste Schaltungssubstrat ist auf der ersten Oberfläche angeordnet. Die ersten Leuchtdioden sind elektrisch mit dem ersten Schaltungssubstrat verbunden.

Aus der WO 2013/056516 A1 ist eine Lampe bekannt, deren Kolben über seine Länge eine Einbuchtung aufweist, um die Abstrahleigenschaften der Lampe zu verbessern. Aus der US 2012/0099302 A1 ist eine Lampe bekannt, deren Kolben eine im Inneren angeformte Nut zur Halterung einer Leiterplatte aufweist. Es ist die **Aufgabe** der vorliegenden Erfindung, die Nachteile des Standes der Technik zumindest teilweise zu überwinden und insbesondere eine besonders einfach montierbare, robuste, preiswerte und/oder langlebige Halbleiter-Röhrenlampe bereitzustellen.

Diese Aufgabe wird gemäß den Merkmalen des Anspruchs 1 gelöst. Bevorzugte Ausführungsformen sind insbesondere den abhängigen Ansprüchen entnehmbar.

Die Aufgabe wird gelöst durch eine Halbleiter-Röhrenlampe mit einem Rohr, welches innenseitig mindestens einen Halterungsvorsprung zur Halterung einer Leiterplatte aufweist, wobei das Rohr ein Glasrohr ist und der mindestens eine Halterungsvorsprung ein sich nach innen (d.h., sich in das Innere des Glasrohrs) wölbender, umgeformter Bereich (im Folgenden ohne Beschränkung der Allgemeinheit als "Noppungsbereich" oder "Noppung" bezeichnet) des Rohrs ist. Der Noppungsbereich mag auch als "Vertiefungsbereich" oder als "Bombierung" bezeichnet werden. Der mindestens eine Noppungsbereich dient also der Halterung, Befestigung oder Fixierung der mindestens einen Leiterplatte. Dadurch, dass das Rohr ein Glasrohr ist, ergibt sich im Gegensatz zu einem Kunststoffrohr der Vorteil, dass es zum Erzeugen des mindestens einen Noppungsbereichs vergleichsweise einfach umformbar ist, ohne beschädigt zu werden. So können Herstellungskosten gesenkt werden. Insbesondere kann das Rohr aus einem einfachen, innen glatten Glasrohr umgeformt werden. Auf eine aufwändige Herstellung innerer Halterungsstrukturen durch Materialzusatz zu einer Grundform des Rohrs kann verzichtet werden.

Auch ergibt sich im Vergleich zu einem Kunststoffrohr eine höhere Stabilität des Glasrohrs gegenüber mechanischen Beanspruchungen, z.B. gegenüber einer Durchbiegung, besonders bei großen Längen. Zudem ist ein Glasrohr kratzfester als ein Kunststoffrohr. Darüber hinaus weist das Glasrohr eine wesentlich bessere UV-Stabilität auf.

Das Glasrohr mag ein oder mehrere Noppungsbereiche aufweisen. Diese mögen in Umfangsrichtung und/oder in Längsrichtung des Rohrs verteilt sein. Das Glasrohr mag auch als rohrförmiger Glaskolben bezeichnet werden. Das Glasrohr ist zumindest bereichsweise, insbesondere vollständig, lichtdurchlässig.

Die Leiterplatte weist mindestens eine Halbleiterlichtquelle auf. Bevorzugterweise umfasst die mindestens eine Halbleiterlichtquelle mindestens eine Leuchtdiode. Bei Vorliegen mehrerer Leuchtdioden können diese in der gleichen Farbe oder in verschiedenen Farben leuchten. Eine Farbe kann monochrom (z.B. rot, grün, blau usw.) oder multichrom (z.B. weiß) sein. Auch kann das von der mindestens einen Leuchtdiode abgestrahlte Licht ein infrarotes Licht (IR-LED) oder ein ultraviolettes Licht (UV-LED) sein. Mehrere Leuchtdioden können ein mehrfarbigen (Summen-)Mischlicht erzeugen; z.B. ein weißes Mischlicht. Die mindestens eine Leuchtdiode kann mindestens einen wellenlängenumwandelnden Leuchtstoff enthalten (Konversions-LED). Der Leuchtstoff kann alternativ oder zusätzlich entfernt von der Leuchtdiode angeordnet sein ("Remote Phosphor"). Mindestens eine Leuchtdiode kann in Form mindestens einer einzeln gehausten Leuchtdiode oder in Form mindestens eines LED-Chips vorliegen. Mehrere LED-Chips können auf einem gemeinsamen Substrat ("Submount") montiert sein. Die mindestens eine Leuchtdiode kann mit mindestens einer eigenen und/oder gemeinsamen Optik zur Strahlführung ausgerüstet sein, z.B. mindestens einer Fresnel-Linse, Kollimator, und so weiter. Anstelle oder zusätzlich zu anorganischen Leuchtdioden, z.B. auf Basis von InGaN oder AlInGaP, sind allgemein auch organische LEDs (OLEDs, z.B. Polymer-OLEDs) einsetzbar. Alternativ kann die mindestens eine Halbleiterlichtquelle z.B. mindestens einen Diodenlaser aufweisen.

Die Leiterplatte mag zusätzlich mindestens ein elektrisches und/oder elektronisches Bauteil zum Betreiben der mindestens einen Halbleiterlichtquelle (Treiberbauteil) aufweisen. Die Leiterplatte kann dann auch als eine "Light Engine" bezeichnet werden, ohne das Treiberbauteil auch als Modul.

Die Leiterplatte mag auch als "Leuchtband" bezeichnet werden, für den Fall, dass die mindestens eine Halbleiterlichtquelle eine LED ist, auch als "LED-Band". Solche LED-Bänder sind z.B. von der Firma Osram unter dem Handelsnamen "LINEARlight" erhältlich.

Das Glasrohr mag transparent oder opak bzw. lichtstreuend sein, z.B. aus Milchglas bestehen und/oder eine lichtstreuende Oberfläche aufweisen. Das Glasrohr mag ganz oder bereichsweise beschichtet sein, z.B. teilweise mit einer blickdichten Schicht, einer Anti-Reflexschicht, einer Streuschicht, einer Hartschicht usw., insbesondere innenseitig. Dabei weist ein Glasrohr vorteilhafterweise eine gegenüber einem Kunststoffrohr erhöhte Beständigkeit und/oder eine bessere Haftung der Beschichtung(en) auf.

Mindestens ein Noppungsbereich ist insbesondere ein lokal begrenzter Bereich, dessen seitliche oder laterale Ausdehnung in mindestens eine Richtung (z.B. in eine Längsrichtung und/oder in eine Umfangsrichtung des Rohrs) mindestens eine Größenordnung kleiner ist als eine Ausdehnung des nicht umgeformten Glasrohrs in diese Richtung. Ein nur in einer Umfangsrichtung des Rohrs lokal begrenzter Noppungsbereich mag also in Längsrichtung eine im Vergleich zu einer Rohrlänge nicht vernachlässigbar kleine Ausdehnung besitzen, z.B. sich über die Ganze oder fast die ganze Rohrlänge erstrecken.

Mindestens ein Noppungsbereich ist insbesondere ein "punktförmiger" Bereich, der sowohl in die Längsrichtung als auch in die Umfangsrichtung mindestens eine Größenordnung (d.h., ca. um einen Faktor 10) kleiner ist als das nicht umgeformte Glasrohr. Der Noppungsbereich kann z.B. rund, oval oder elliptisch geformt sein.

Es ist eine Ausgestaltung, dass das Rohr mindestens zwei Noppungsbereiche aufweist. Diese können insbesondere spiegelsymmetrisch zueinander vorgesehen bzw. ausgebildet und angeordnet sein, insbesondere zu einer das Rohr längs schneidenden, gedachten Ebene ("Längsebene"). So wird auf besonders einfache Weise eine Halterung bzw. Führung der Leiterplatte in dem Glasrohr quer zu dessen Längsrichtung ermöglicht. Insbesondere kann eine bandförmige Leiterplatte auf einfache Weise längs in das Glasrohr eingeführt und dort mittels der Noppungsbereiche in Querrichtung gehalten werden.

Es mag ausreichend sein, wenn sich auf jeder Seite der Längsebene ein Noppungsbereich befindet, insbesondere ein in Längsrichtung ausgedehnter Noppungsbereich. Die Leiterplatte mag endseitig oder stirnseitig auch durch Endkappen gehalten werden.

Erfindungsgemäß weist das Rohr mindestens zwei Gruppen von Noppungsbereichen auf, welche Gruppen an jeweiligen längsseitig beabstandeten Sektionen des Rohrs angeordnet sind. Zwischen diesen Sektionen sind insbesondere keine Noppungsbereiche vorhanden. Diese Ausgestaltung vereinfacht eine wirtschaftliche Herstellung der Noppungsbereiche. Die Noppungsbereiche einer Sektion befinden sich insbesondere an einer gleichen Längenposition. Die Sektionen können auch als ringförmige Längenabschnitte des Rohrs angesehen werden.

Die Zahl der mit Noppungsbereichen versehenen Sektionen kann unterschiedlich sein und z.B. auch mehr als zwei betragen. So können beispielsweise drei, vier oder noch mehr Sektionen vorhanden sein, wenn das Rohr eine hohe Rohrlänge aufweist und/oder eine hohe Festigkeit oder Steifigkeit der Leiterplatte gewünscht ist. Beispielsweise mag eine Leiterplatte in einem Rohr mit einer Rohrlänge von ca. 600 mm mit Hilfe von zwei Sektionen fixiert sein, in einem Rohr mit einer Rohrlänge von ca. 1200 mm mit Hilfe von vier Sektionen fixiert sein usw.

Es ist noch eine weitere Ausgestaltung, dass die Sektionen des Rohrs gleiche Noppungsbereiche aufweisen, also gleich geformt sind. Dies erleichtert eine Einbringung der Noppungsbereichs noch weiter, da das dazu nötige Werkzeug nicht geändert zu werden braucht.

Es ist ferner eine Ausgestaltung, dass die Noppungsbereiche dazu vorgesehen (bzw. geformt und angeordnet) sind, genau eine Flachseite der Leiterplatte (d.h., eine Oberseite oder eine Unterseite) zu kontaktieren und die andere Flachseite auf einem nicht umgeformten Bereich des Rohrs aufliegt. Hierdurch lässt sich eine Halterung der Leiterplatte mit besonders wenigen Bombierungen erreichen. Diese Ausgestaltung ist besonders vorteilhaft einsetzbar, wenn eine Innenseite des Rohrs nicht kratzempfindlich ist und somit durch eine auf der Innenseite reibgleitend eingeführte Leiterplatte nicht beschädigt wird.

Es ist außerdem eine Ausgestaltung, dass die Noppungsbereiche dazu vorgesehen sind, beide Flachseiten der Leiterplatte zu kontaktieren, also sowohl die Oberseite als auch die Unterseite. Dadurch kann vermieden werden, dass die Leiterplatte beim Einführen über die Innenseite des Rohrs gleitet oder kratzt und so dort eine kratzempfindliche Beschichtung beschädigt. Die Leiterplatte wird nun vielmehr nur durch die Noppungsbereiche gehalten, die insbesondere nur punktförmig ausgebildet sind.

Das Kontaktieren einer Flachseite umfasst auch ein Kontaktieren eines dieser Flachseite zugehörigen Längsrands oder Längskante, insbesondere nur des Längsrands.

Es ist zudem eine Ausgestaltung, dass ein Rand-zu-Rand-Abstand benachbarter Noppungsbereiche mindestens einem Zweifachen einer Wandstärke des nicht umgeformten Rohrs entspricht. Dadurch wird eine nachteilig starke Reduzierung einer Wandstärke des Rohrs vermieden.

Die Halbleiter-Röhrenlampe weist mindestens eine mit mindestens einer Halbleiterlichtquelle bestückte Leiterplatte auf, die in dem Rohr untergebracht ist und mittels mindestens eines Noppungsbereichs quer zu einer Längsrichtung des Rohrs zumindest formschlüssig (ggf. auch kraftschlüssig und/oder formschlüssig) gehaltert ist. Unter einer formschlüssigen Halterung mag insbesondere eine Halterung verstanden werden, bei der das Rohr und die Leiterplatte so ineinandergreifen, dass sie sich auch ohne oder bei unterbrochener Kraftübertragung nicht voneinander lösen können. Anders ausgedrückt steht bei der formschlüssigen Halterung das Rohr der Leiterplatte im Weg und verhindert so eine freie Bewegung der Leiterplatte. Unter einer kraftschlüssigen Halterung mag insbesondere eine Halterung verstanden werden, bei der die Leiterplatte durch Haftreibung von dem Rohr gehalten wird.

Es ist ferner eine Ausgestaltung, dass die Halbleiter-Röhrenlampe einen Doppel-T-förmigen Träger aufweist, auf dessen gegenüberliegenden Flachseiten jeweils mindestens eine Leiterplatte aufliegt und der Träger mittels der sich zwischen den Flachseiten in Richtung eines Mittelteils des Trägers nach innen wölbenden Bereiche geführt ist.

Es ist auch eine Ausgestaltung, dass die Leiterplatte durch die Noppungsbereiche längsverschieblich gehaltert ist. Die Leiterplatte kann sich also zumindest in Bezug auf das Rohr noch in Längsrichtung frei bewegen. Ist zudem durch die Endkappen noch ein Längsspiel gegeben, kann die Leiterplatte sich auch noch in der fertig montierten Halbleiter-Röhrenlampe für ein kurzes Stück frei bewegen. Dies ergibt den Vorteil, dass sich die Leiterplatte bei einer Längendehnung (z.B. aufgrund einer Erwärmung) frei bewegen kann und sich nicht verbiegt.

Alternativ mag die Leiterplatte in Bezug auf das Rohr nicht oder praktisch nicht längsverschieblich sein. Dies mag beispielsweise durch eine kraft- und/oder stoffschlüssige Halterung in dem Rohr und/oder durch eine Fixierung in Längsrichtung durch Endkappen der Halbleiter-Röhrenlampe erreicht werden. Unter einer stoffschlüssigen Halterung mag insbesondere eine Halterung verstanden werden, bei denen das Rohr und die Leiterplatte durch atomare oder molekulare Kräfte zusammengehalten werden, z.B. mittels einer Klebung. Sie ist insbesondere eine Halterung, die sich nur durch Zerstörung der Verbindungsmittel trennen lässt.

Es ist noch eine Weiterbildung, dass die Halbleiter-Röhrenlampe eine Retrofitlampe ist, insbesondere zum Ersatz einer herkömmlichen Leuchtstofflampe, insbesondere vom Typ T5 oder T8, oder einer herkömmlichen Linienlampe.

Die vorliegende Offenbarung beschreibt ferner ein Verfahren zum Herstellen eines Rohrs bzw. rohrförmigen Kolbens, insbesondere wie oben beschrieben, bei dem das Rohr bereitgestellt wird, dann lokal erwärmt wird und zum Erzeugen des mindestens einen Noppungsbereichs an der mindestens einen lokal erwärmten Stelle nach innen eingedrückt wird. Dadurch werden die gleichen Vorteile erreicht wie bei den oben beschriebenen Vorrichtungen, und das Verfahren kann analog ausgestaltet werden.

Das lokale Erwärmen und Eindrücken kann für mehrere Noppungsbereiche gleichzeitig durchgeführt werden (z.B. für mehrere Noppungsbereiche einer gleichen Sektion). Das lokale Erwärmen und Eindrücken kann alternativ oder zusätzlich für mehrere Noppungsbereiche nacheinander durchgeführt werden (z.B. für unterschiedliche Sektionen).

Das lokale Erwärmen kann beispielsweise mittels eines auf die zu erwärmende Stelle gerichteten Brenners durchgeführt werden. Zum Vermeiden von internen Spannungen mag die mindestens eine zu erwärmende Stelle zunächst mittels eines Brenners (insbesondere mittels mindestens eines dedizierten Vorwärmbrenners) vorgewärmt werden und danach (insbesondere mittels mindestens eines dedizierten Heizbrenners) auf die gewünschte Endtemperatur hochgeheizt werden.

Es ist noch eine weitere Ausgestaltung, dass die mindestens eine lokal erwärmte Stelle mittels eines kegelstumpfförmigen, halbkreisförmigen oder sichelförmigen (Form-)Werkzeugs nach innen eingedrückt wird. Diese Werkzeugform ermöglicht das Erzeugen eines tiefen, präzise reproduzierbaren Noppungsbereichs mit ausreichender Wandstärke.

Das kegelstumpfförmige Werkzeug weist vorzugsweise einen Durchmesser von 1 mm bis 3 mm, insbesondere von ca. 2 mm, auf. Ein Kegelwinkel beträgt vorzugsweise ca. 10°-15°. Es hat sich als vorteilhaft herausgestellt, dass der Noppungsbereich 2 mm bis 6 mm, insbesondere ca. 4 mm, tief eingedrückt wird. Je dicker die Wandstärke des Rohrs ist, desto tiefer mag eingedrückt werden, um eine ausreichende Verformung zu erhalten.

Es ist eine zum Vermeiden von Spannungen an oder in dem Noppungsbereich vorteilhafte Weiterbildung, dass der Noppungsbereich nochmals erwärmt oder getempert wird, beispielsweise mittels mindestens eines dedizierten Temperbrenners. Der Temperbrenner mag dem Vorwärmbrenner entsprechen und z.B. eine ganze Sektion erwärmen.

Der Abstand des nächsten Noppungsbereichs zu einer Stirnseite des Rohrs beträgt beispielsweise zwischen ca. 200 mm und 250 mm.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.
- Fig.1 bis 5: zeigen als Schnittdarstellungen in Frontalansicht erste bis fünfte Ausführungsbeispiele von Rohren jeweiliger Halbleiter-Röhrenlampen; und
- Fig.6: zeigt in einer Schrägansicht von der Seite eine Halbleiter-Röhrenlampe mit einem Rohr gemäß dem vierten Ausführungsbeispiel.

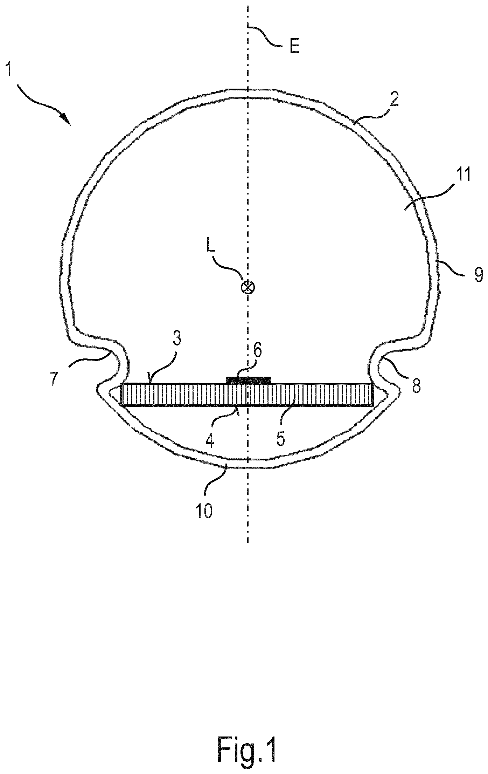

**Fig.1** zeigt ein erstes Ausführungsbeispiel eines lichtdurchlässigen Glasrohrs 2 einer Halbleiter-Röhrenlampe in Form einer LED-Retrofitlampe 1 zum Ersatz z.B. einer Leuchtstofflampe ("Stableuchte") vom Typ T5 oder T8, gemäß der Erfindung.

Das Glasrohr 2 weist einen grundsätzlich kreisringförmigen Querschnitt mit z.B. zwei offenen Stirnflächen auf. Das Glasrohr mag transparent oder transluzent (milchig) sein. Das Glasrohr 2 mag ganz oder bereichsweise beschichtet sein, z.B. teilweise mit einer blickdichten Schicht, einer Anti-Reflexschicht, einer Streuschicht, einer Hartschicht usw.

Hier ist eine Leiterplatte 5 in einen Innenraum 11 des Glasrohrs 2 eingeführt und wird von dem Glasrohr 2 gehalten. Eine Vorderseite 3 der Leiterplatte 5 ist mit mehreren Halbleiterlichtquellen in Form von LEDs 6 bestückt (insbesondere von LED-Chips), welche entlang einer Längsachse L des Glasrohrs 2 in Reihe beabstandet zueinander angeordnet sind. Eine Rückseite 4 der Leiterplatte 5 ist hier nicht bestückt, mag es aber grundsätzlich sein, z.B. mit elektrischen und/oder elektronischen Bauelementen und/oder mit LEDs 6.

Zur Halterung der Leiterplatte 5 weist das Glasrohr 2 mindestens zwei von nach innen gewölbt vorspringende Noppungsbereiche 7, 8 auf, von denen hier genau zwei Noppungsbereiche 7, 8 gezeigt sind. Die Noppungsbereiche 7, 8 liegen beispielhaft spiegelsymmetrisch zu einer das Glasrohr 2 längs schneidenden Längsebene E. Die Längsebene E verläuft senkrecht durch die Längsachse L. In der gezeigten Schnittebene weist das Glasrohr 2 ferner einen sich oberhalb davon anschließenden ersten kreissektorförmigen Abschnitt 9 und einen sich unterhalb davon anschließenden zweiten kreissektorförmigen Abschnitt 10 auf.

Die Noppungsbereiche 7, 8 können sich durchgehend entlang der Längsachse L erstrecken. Es können aber auch mehrere beabstandet entlang der Längsachse L in Reihe angeordnete Noppungsbereiche 7 bzw. 8 verwendet werden, vorzugsweise mindestens zwei Noppungsbereiche 7 und mindestens zwei Noppungsbereiche 8. Diese Noppungsbereiche 7 bzw. 8 können z.B. lokal begrenzt oder "punktartig" ausgebildet sein. Die Noppungsbereiche 7 und 8 führen zusammen mit dem zweiten (unteren) kreissektorförmigen Abschnitt 10 die Leiterplatte 5 zwischen sich und befestigen und positionieren sie. Die Noppungsbereiche 7 bzw. 8 dienen also zusammen mit dem zweiten kreissektorförmigen Abschnitt 10 einer Befestigung und einer Positionierung der Leiterplatte 5 zumindest quer zu der Längsachse L. Die Noppungsbereiche 7 bzw. 8 halten die Leiterplatte 5 an ihrer Oberseite 3, insbesondere an einem jeweiligen (oberen) Längsrand der Leiterplatte 5. Der zweite kreissektorförmige Abschnitt 10 hält die Leiterplatte 5 an ihrer Unterseite 4, insbesondere an deren Längsrändern. Dieses Ausführungsbeispiel ist insbesondere vorteilhaft einsetzbar, wenn eine Innenseite des Glasrohrs 2 nicht kratzempfindlich ist und folglich durch eine Bewegung und/oder Auflage der Leiterplatte 5 auf dem zweiten kreissektorförmigen Abschnitt 10 dort nicht beschädigt wird. Die Noppungsbereiche 7, 8 sind durch nachträgliches Umformen des zunächst ohne die Noppungsbereiche 7, 8 bereitgestellten Glasrohrs 2 hergestellt worden, z.B. durch lokales Eindrücken nach innen.

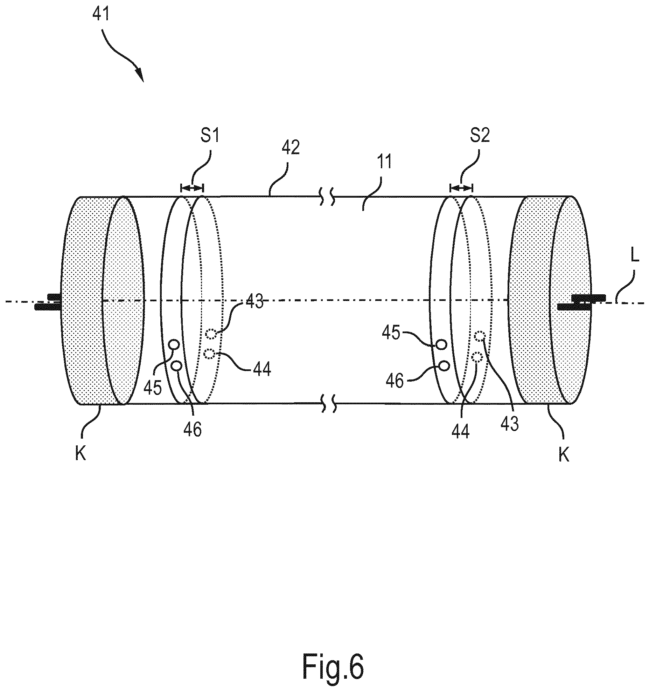

Die LED-Retrofitlampe 1 mag außer dem Glasrohr 2 und der bestückten Leiterplatte 5 z.B. noch stirnseitig angebrachte Anschlusskappen aufweisen, wie beispielhaft in Fig.6 gezeigt.

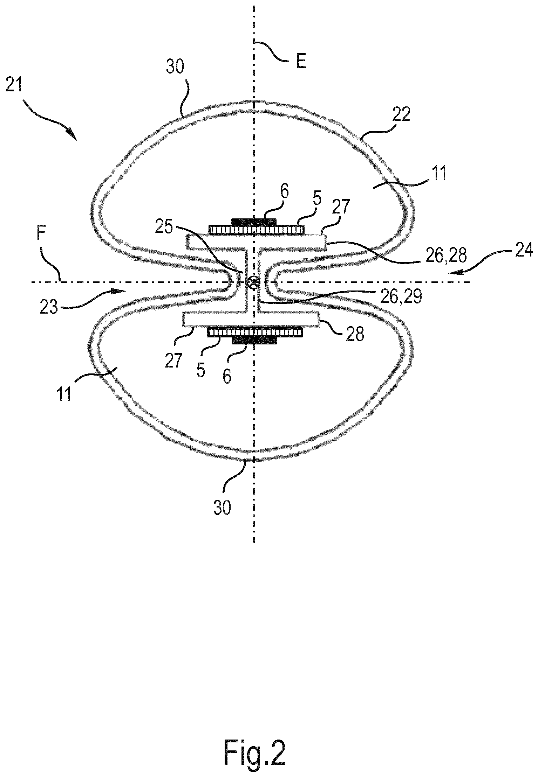

**Fig.2** zeigt ein zweites Ausführungsbeispiel eines Glasrohrs 22 einer Halbleiter-Röhrenlampe in Form einer LED-Retrofitlampe 21, gemäß der Erfindung. Die LED-Retrofitlampe 21 weist ebenfalls mindestens zwei nach innen gewölbt vorspringende Noppungsbereiche 23, 24 auf, die nun das Glasrohr 22 im Profil mittig einschnüren. Das Glasrohr 22 ist also nicht nur zu der senkrechten Ebene E, sondern auch zu einer waagerechten Ebene F spiegelsymmetrisch ausgebildet.

Die Noppungsbereiche 23, 24 sind so weit nach innen gewölbt, dass sie nur einen vergleichsweise engen Spalt 25 zwischen sich belassen. In den Spalt 25 ist ein Doppel-T-förmiger Träger 26 eingeführt, z.B. aus Aluminium. An den gegenüberliegenden äußeren Flachseiten 27 der Querteile 28 (auch als Flansche oder Gurte bezeichnet) ist jeweils eine Leiterplatte 5 angebracht. Die LED-Retrofitlampe 21 weist also nicht nur in einen Halbraum abstrahlende LEDs 6 auf, sondern strahlt Licht in zwei Halbräume ab, nämlich wie hier dargestellt in einen oberen Halbraum und in einen unteren Halbraum. Zur Befestigung und Positionierung des Trägers 26 und damit der Leiterplatten 5 wird ein Mittelteil 29 oder Steg durch den Spalt 25 geführt.

An die Noppungsbereiche 23, 24 schließen oberseitig und unterseitig kreissektorförmige Abschnitte 30 des Glasrohrs 22 an.

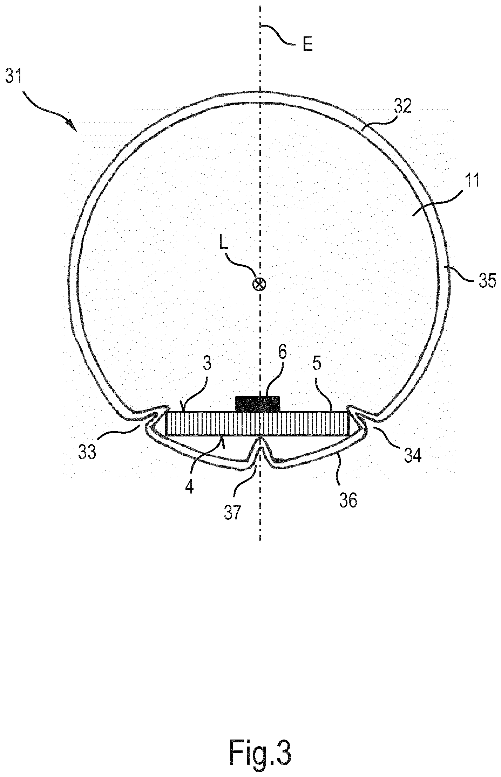

**Fig.3** zeigt ein drittes Ausführungsbeispiel eines Glasrohrs 32 einer Halbleiter-Röhrenlampe in Form einer LED-Retrofitlampe 31, gemäß der Erfindung. Das Glasrohr 32 weist ähnlich zu der LED-Retrofitlampe 1 mindestens zwei nach innen gewölbt vorspringende Noppungsbereiche 33, 34 auf, welche auf der Oberseite 3 der Leiterplatte 5 aufliegen, insbesondere im Bereich eines Längsrands. Die Noppungsbereiche 33, 34 dienen somit als Anschlag oder Halterung gegen eine Bewegung der Leiterplatte 5 in Richtung ihrer Oberseite 3. Die Noppungsbereiche 33, 34 liegen hier beispielhaft spiegelsymmetrisch zu der das Glasrohr 32 längs schneidenden senkrechten Ebene E. Das Glasrohr 32 weist ferner - ähnlich zu der LED-Retrofitlampe 1 - einen sich oberhalb an die Noppungsbereiche 33, 34 anschließenden ersten kreissektorförmigen Abschnitt 35 und einen sich unterhalb davon anschließenden zweiten kreissektorförmigen Abschnitt 36 auf.

Der zweite kreissektorförmige Abschnitt 36 weist - zusätzlich zu der LED-Retrofitlampe 1 - mittig und damit im Bereich der senkrechten Ebene E mindestens einen nach weiteren Noppungsbereich 37 auf. Dieser Noppungsbereich 37 kontaktiert die Unterseite 4 der Leiterplatte 5 mittig. Der Noppungsbereich 37 mag beispielsweise dazu dienen, die Leiterplatte 5 stärker von unten abzustützen, z.B. zur kraftschlüssigen Halterung der Leiterplatte 5, zur Verringerung einer Auflagekraft der Leiterplatte auf dem nicht-bombierten Bereich des zweiten kreissektorförmigen Abschnitts 36 und/oder zum Verhindern eines Durchhängen der Leiterplatte 5 (insbesondere wenn die Leiterplatte 5 flexibel ist). Der mindestens eine Noppungsbereich 37 mag an einem gleichen Längsabschnitt oder Sektion (siehe auch Fig.6) wie die Noppungsbereiche 33, 34 angeordnet sein und/oder mag an anderen Sektionen angeordnet sein.

Die oberen Noppungsbereiche 33 und 34 führen also zusammen mit dem unteren Noppungsbereich 37 die Leiterplatte 5 zwischen sich und befestigen und positionieren sie. Die Noppungsbereiche 33, 34 und 37 dienen also einer Befestigung und einer Positionierung der Leiterplatte 5 im Innenraum 11 des Glasrohrs 32. Die Noppungsbereiche 33, 34 und 37 sind vorzugsweise punktförmig.

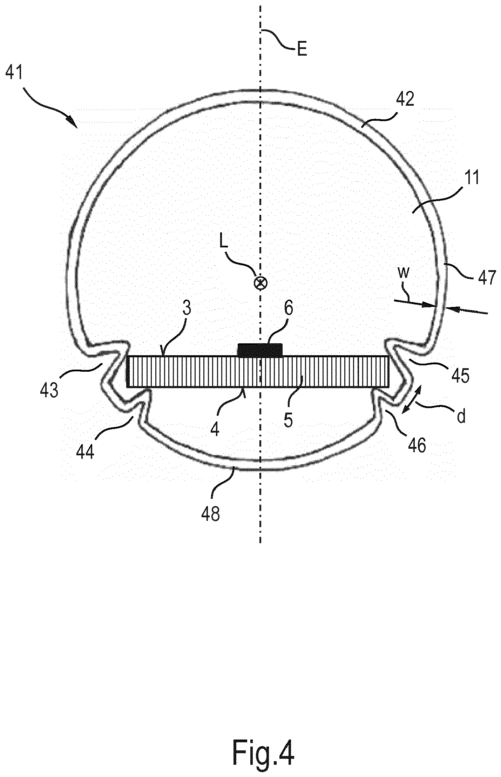

**Fig.4** zeigt ein viertes Ausführungsbeispiel eines Glasrohrs 42 einer Halbleiter-Röhrenlampe in Form einer LED-Retrofitlampe 41, gemäß der Erfindung. Auch hier ist die Leiterplatte 5 in den Innenraum 11 des Glasrohrs 42 eingeführt worden. Das Glasrohr 42 weist zur Halterung der Leiterplatte 5 mindestens zwei Paare von nach innen gewölbt vorspringenden Noppungsbereichen 43, 44 bzw. 45, 46 auf. Die Noppungsbereiche eines Paars 43, 44 bzw. 45, 46 sind in Umfangsrichtung um die Längsachse beabstandet angeordnet. Die Noppungsbereichen 43 bis 46 sind vorzugsweise punktförmig ausgebildet.

Ein Rand-zu-Rand-Abstand d benachbarter Noppungsbereiche 43 und 44 bzw. 45 und 46 entspricht mindestens einem Zweifachen einer Wandstärke w des nicht umgeformten Glasrohrs 42. Dadurch wird eine nachteilig starke Reduzierung einer Wandstärke w des Glasrohrs 42 vermieden und eine präzise Ausformung der Noppungsbereiche 43 und 46 sichergestellt.

Die Paare 43, 44 bzw. 45, 46 sind hier beispielhaft spiegelsymmetrisch zu der Längsebene E ausgebildet. In der gezeigten Schnittebene weist das Glasrohr 42 einen sich oberhalb davon anschließenden ersten kreissektorförmigen Abschnitt 47 und einen sich unterhalb davon anschließenden zweiten kreissektorförmigen Abschnitt 48 auf.

Die oberen Noppungsbereiche 43 und 45 der Paare 43, 44 bzw. 45, 46 kontaktieren die Oberseite 3 der Leiterplatte, insbesondere im Bereich oder an dessen Längsrand. Die unteren Noppungsbereiche 44 und 46 der Paare 43, 44 bzw. 45, 46 kontaktieren die Unterseite 4 der Leiterplatte 5. Die Noppungsbereiche 43 bis 46 halten also die Leiterplatte 5 zwischen sich, so dass sie nicht an einem nicht umgeformten Bereich des Glasrohrs 42 aufliegt. Insbesondere dienen hier also nur die Noppungsbereiche 43, 44 bzw. 45, 46 zur Befestigung und einer Positionierung der Leiterplatte 5 in dem Glasrohr 42, und zwar zumindest quer zu der Längsachse L.

Dieses Ausführungsbeispiel ist insbesondere vorteilhaft einsetzbar, wenn eine Innenseite des Glasrohrs 2 kratzempfindlich ist und folglich durch eine Bewegung und/oder Auflage der Leiterplatte 5 auf dem zweiten kreissektorförmigen Abschnitt 48 beschädigt würde, z.B. durch Abrieb mindestens eine dort vorhandenen Beschichtung.

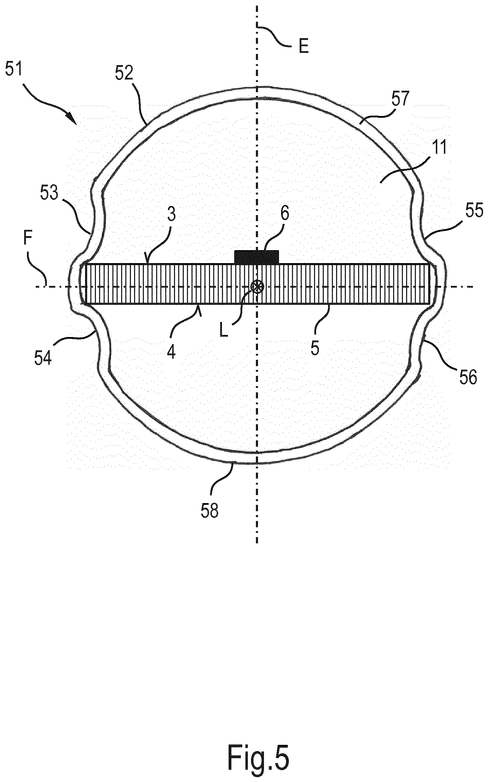

**Fig.5** zeigt ein fünftes Ausführungsbeispiel eines Glasrohrs 52 einer Halbleiter-Röhrenlampe in Form einer LED-Retrofitlampe 51 mit einer in das Glasrohr 52 eingeführten Leiterplatte 5, gemäß der Erfindung. Dazu weist das Glasrohr 52 mindestens zwei Paare von nach innen gewölbt vorspringenden Noppungsbereichen 53, 54 bzw. 55, 56 auf. Die Noppungsbereiche eines Paars 53, 54 bzw. 55, 56 sind in Umfangsrichtung um die Längsachse beabstandet angeordnet.

Die Paare 53, 54 bzw. 55, 56 sie hier beispielhaft spiegelsymmetrisch zu der Längsebene E als auch zu der das Glasrohr 52 längs schneidenden horizontalen Achse F ausgebildet. Dadurch wird die Leiterplatte 5 auf mittiger Höhenposition in dem Innenraum 11 gehalten. In der gezeigten Schnittebene weist das Glasrohr 52 ferner einen sich oberhalb davon anschließenden ersten kreissektorförmigen Abschnitt 57 und einen sich unterhalb davon anschließenden zweiten kreissektorförmigen Abschnitt 58 auf.

Die oberen Noppungsbereiche 53 und 55 der Paare 53, 54 bzw. 55, 56 führen zusammen mit dem unteren Noppungsbereich 54 bzw. 56 die Leiterplatte 5 zwischen sich und befestigen und positionieren sie.

**Fig.6** zeigt in einer Schrägansicht von der Seite die rein beispielhaft ausgewählte LED-Retrofitlampe 41 mit dem Glasrohr 42 gemäß der Erfindung. Das Glasrohr 42 mag beispielsweise eine Glasrohrlänge entlang seiner Längsachse L von ca. 600 mm aufweisen. An seinen stirnseitigen Endbereichen ist das lichtdurchlässige Glasrohr 42 von jeweiligen Endkappen K abgedeckt, z.B. vom Typ G5 oder G13. Das Glasrohr 42 mag dort eine Rollierung aufweisen. In dem Innenraum 11 des Glasrohrs 42 ist die Leiterplatte 5 angeordnet, was aber nicht eingezeichnet ist.

Das Glasrohr 42 weist zwei entlang der Längsachse L beabstandete Sektionen S1 und S2 mit gleichen Noppungsbereichen 43 bis 46 auf. Die Sektionen S1 und S2 sind ca. 200 mm bis 250 mm von den Stirnseiten des Glasrohrs 42 entfernt. Mittels der Noppungsbereiche 43 bis 46 der S1 und S2 ist die Leiterplatte 5 quer zu der Längsrichtung L zumindest fixiert, wie auch in Fig.4 gezeigt. Sie mag zum Ausgleich einer thermischen Ausdehnung in Richtung der Längsachse L ein kurzes Stück frei beweglich sein.

In Fig.6 mag analog ein Glasrohr 2, 22, 32 oder 52 verwendet werden.

Obwohl die Erfindung im Detail durch die gezeigten Ausführungsbeispiele näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

So mag die Leiterplatte allgemein außer den LEDs einen Treiber oder Teile eines Treibers zum Betreiben der LEDs aufweisen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichen

- 1: LED-Retrofitlampe
- 2: Glasrohr
- 3: Vorderseite der Leiterplatte
- 4: Rückseite der Leiterplatte
- 5: Leiterplatte
- 6: LED
- 7: Noppungsbereich
- 8: Noppungsbereich
- 9: Erster kreissektorförmiger Abschnitt des Glasrohrs
- 10: Zweiter kreissektorförmiger Abschnitt des Glasrohrs
- 11: Innenraum des Glasrohrs
- 21: LED-Retrofitlampe
- 22: Glasrohr
- 23: Noppungsbereich
- 24: Noppungsbereich
- 25: Spalt
- 26: Träger
- 27: Äußere Flachseite
- 28: Querteil des Trägers
- 29: Mittelteil des Trägers
- 30: Kreissektorförmiger Abschnitt des Glasrohrs
- 31: LED-Retrofitlampe
- 32: Glasrohr
- 33: Noppungsbereich
- 34: Noppungsbereich
- 35: Erster kreissektorförmiger Abschnitt des Glasrohrs
- 36: Zweiter kreissektorförmiger Abschnitt des Glasrohrs
- 37: Noppungsbereich
- 41: LED-Retrofitlampe
- 42: Glasrohr
- 43: Noppungsbereich eines ersten Paars
- 44: Noppungsbereich eines ersten Paars
- 45: Noppungsbereich eines zweiten Paars
- 46: Noppungsbereich eines zweiten Paars
- 47: Erster kreissektorförmiger Abschnitt des Glasrohrs
- 48: Zweiter kreissektorförmiger Abschnitt des Glasrohrs
- 51: LED-Retrofitlampe
- 52: Glasrohr
- 53: Noppungsbereich eines ersten Paars
- 54: Noppungsbereich eines ersten Paars
- 55: Noppungsbereich eines zweiten Paars
- 56: Noppungsbereich eines zweiten Paars
- 57: Erster kreissektorförmiger Abschnitt des Glasrohrs
- 58: Zweiter kreissektorförmiger Abschnitt des Glasrohrs
- d: Rand-zu-Rand-Abstand
- E: senkrechte Ebene
- F: waagerechte Ebene
- K: Endkappe
- L: Längsachse
- S1: Erste Sektion
- S2: Zweite Sektion
- w: Wandstärke

## Patentansprüche

1. Halbleiter-Röhrenlampe (1; 21; 31; 41; 51), aufweisend ein Rohr (2; 22; 32; 42; 52), welches innenseitig mindestens einen Halterungsvorsprung aufweist,
wobei
das Rohr (2; 22; 32; 42; 52) ein Glasrohr ist, **dadurch gekennzeichnet, dass**
der mindestens eine Halterungsvorsprung ein sich nach innen wölbender, umgeformter Noppungsbereich (7, 8; 23, 24; 33, 34, 37; 43-46; 53-56) des Rohrs (2; 22; 32; 42; 52) ist,
wobei das Rohr (2; 22; 32; 42; 52) mindestens zwei Gruppen von Noppungsbereichen (7, 8; 23, 24; 33, 34; 43-46; 53-56) aufweist,
wobei die Halbleiter-Röhrenlampe weiter eine mit mindestens einer Halbleiterlichtquelle (6) bestückte Leiterplatte (5) aufweist, die in dem Rohr (2; 22; 32; 42; 52) untergebracht ist und quer zu einer Längsrichtung (L) des Rohrs (2; 22; 32; 42; 52) mittels mindestens des Noppungsbereichs (7, 8; 23, 24; 33, 34, 37; 43-46; 53-56) formschlüssig gehaltert ist,
**dadurch gekennzeichnet, dass** die mindestens zwei Gruppen von Noppungsbereichen (7, 8; 23, 24; 33, 34; 43-46; 53-56) an jeweiligen längsseitig beabstandeten Sektionen des Rohrs (2; 22; 32; 42; 52) angeordnet sind.

2. Halbleiter-Röhrenlampe (1; 21; 31; 41; 51) nach Anspruch 1, wobei das Rohr (2; 22; 32; 42; 52) mindestens zwei Noppungsbereiche (7, 8; 23, 24; 33, 34; 43-46; 53-56) aufweist, welche spiegelsymmetrisch zu einer das Rohr (2; 22; 32; 42; 52) längs schneidenden Ebene (E) liegen.

3. Halbleiter-Röhrenlampe (1) nach Anspruch 2, wobei die Noppungsbereiche (7, 8) dazu vorgesehen sind, genau eine Flachseite (3) der Leiterplatte (5) zu kontaktieren und die andere Flachseite (4) auf einem nicht umgeformten Bereich des Rohrs (2) aufliegt.

4. Halbleiter-Röhrenlampe (31; 41; 51) nach Anspruch 2, wobei die Noppungsbereiche (33, 34; 43-46; 53-56) dazu vorgesehen sind, beide Flachseiten (3, 4) der Leiterplatte (5) zu kontaktieren.

5. Halbleiter-Röhrenlampe (1; 21; 31; 41; 51) nach Anspruch 1, wobei die Sektionen des Rohrs (2; 22; 32; 42; 52) gleiche Noppungsbereiche (7, 8; 23, 24; 33, 34; 43-46; 53-56) aufweisen.

6. Halbleiter-Röhrenlampe (1; 21; 31; 41; 51) nach einem der vorhergehenden Ansprüche, wobei ein Rand-zu-Rand-Abstand (d) benachbarter Noppungsbereiche (7, 8; 23, 24; 33, 34, 37; 43-46; 53-56) mindestens einem Zweifachen einer Wandstärke (w) des nicht umgeformten Rohrs (2; 22; 32; 42; 52) entspricht.

7. Halbleiter-Röhrenlampe (21) nach einem der vorhergehenden Ansprüche, wobei
- die Halbleiter-Röhrenlampe (21) einen Doppel-T-förmigen Träger (26) aufweist, auf dessen gegenüberliegenden Flachseiten (27) jeweils mindestens eine Leiterplatte (5) aufliegt und
- der Träger (26) mittels sich zwischen den Flachseiten (27) in Richtung eines Mittelteils (29) nach innen wölbenden Noppungsbereichen (23, 24) geführt ist.

8. Halbleiter-Röhrenlampe (21) nach einem der vorhergehenden Ansprüche, wobei die Leiterplatte (5) durch die Noppungsbereiche (7, 8; 23, 24; 33, 34; 43-46; 53-56) längsverschieblich gehaltert ist.

## Claims

1. A semiconductor tube lamp (1; 21; 31; 41; 51) comprising a tube (2; 22; 32; 42; 52) which has at least one retaining projection on the inside,
wherein the tube (2; 22; 32; 42; 52) is a glass tube, **characterized in that**
the at least one retaining projection is an inwardly bulging, deformed knob region (7, 8; 23, 24; 33, 34, 37; 43-46; 53-56) of the tube (2; 22; 32; 42; 52),
wherein the tube (2; 22; 32; 42; 52) has at least two groups of burling regions (7, 8; 23, 24; 33, 34; 43-46; 53-56),
wherein the semiconductor tube lamp further comprises a printed circuit board (5) equipped with at least one semiconductor light source (6) which is accommodated in the tube (2; 22; 32; 42; 52) and is held in a form fitting manner transversely to a longitudinal direction (L) of the tube (2; 22; 32; 42; 52) by means of at least the knob region (7, 8; 23, 24; 33, 34, 37; 43-46; 53-56), **characterized in that** the at least two groups of burling regions (7, 8; 23, 24; 33, 34; 43-46; 53-56) are arranged on respective sections of the tube (2; 22; 32; 42; 52) which are spaced apart longitudinally.

2. The semiconductor tube lamp (1; 21; 31; 41; 51) according to claim 1, wherein the tube (2; 22; 32; 42; 52) has at least two burling regions (7, 8; 23, 24; 33, 34; 43-46; 53-56) which lie mirror-symmetrically to a plane (E) intersecting the tube (2; 22; 32; 42; 52) longitudinally.

3. The semiconductor tube lamp (1) according to claim 2,
wherein the burling regions (7, 8) are provided to contact exactly one flat side (3) of the circuit board (5) and the other flat side (4) rests on an undeformed portion of the tube (2).

4. The semiconductor tube lamp (31; 41; 51) according to claim 2, wherein the burling regions (33, 34; 43-46; 53-56) are provided to contact both flat sides (3, 4) of the circuit board (5).

5. The semiconductor tube lamp (1; 21; 31; 41; 51) according to claim 1, wherein the sections of the tube (2; 22; 32; 42; 52) have the same burling regions (7, 8; 23, 24; 33, 34; 43-46; 53-56).

6. The semiconductor tube lamp (1; 21; 31; 41; 51) according to one of the preceding claims, wherein an edge-to-edge spacing (d) of adjacent burling regions (7, 8; 23, 24; 33, 34, 37; 43-46; 53-56) corresponds to at least twice a wall thickness (w) of the undeformed tube (2; 22; 32; 42; 52) .

7. The semiconductor tube lamp (21) according to one of the preceding claims, wherein
- the semiconductor tube lamp (21) has a double-T-shaped carrier (26), on whose opposite flat sides (27) at least one printed circuit board (5) rests respectively, and
- the carrier (26) is guided by means of burling regions (23, 24) which bulge inwardly between the flat sides (27) in the direction of a central part (29).

8. The semiconductor tube lamp (21) according to one of the preceding claims, wherein the printed circuit board (5) is longitudinally displaceably supported by the burling regions (7, 8; 23, 24; 33, 34; 43-46; 53-56).

## Revendications

1. Lampe tubulaire à semi-conducteur (1 ; 21 ; 31 ; 41 ; 51), présentant un tube (2 ; 22 ; 32 ; 42 ; 52), lequel présente côté intérieur au moins une saillie de maintien,
dans laquelle
le tube (2 ; 22 ; 32 ; 42 ; 52) est en tube en verre, **caractérisée en ce que** l'au moins une saillie de maintien est une zone de nopage (7, 8 ; 23, 24 ; 33, 34, 37; 43-46 ; 53-56) déformée, bombée vers l'intérieur du tube (2 ; 22 ; 32 ; 42 ; 52),
dans laquelle le tube (2 ; 22 ; 32 ; 42 ; 52) présente au moins deux groupes de zones de nopage (7, 8 ; 23, 24 ; 33, 34 ; 43-46 ; 53-56),
dans laquelle la lampe tubulaire à semi-conducteur présente en outre un circuit imprimé (5) équipé d'au moins une source de lumière à semi-conducteur (6), qui est logé dans le tube (2 ; 22 ; 32 ; 42 ; 52) et est maintenu par correspondance de forme transversalement à une direction longitudinale (L) du tube (2 ; 22 ; 32 ; 42 ; 52) au moyen au moins de la zone de nopage (7, 8 ; 23, 24 ; 33, 34, 37 ; 43-46 ; 53-56),
**caractérisée en ce que** les au moins deux groupes de zones de nopage (7, 8 ; 23, 24 ; 33, 34 ; 43-46 ; 53-56) sont agencés au niveau de sections espacées côté longitudinal respectives du tube (2 ; 22 ; 32 ; 42 ; 52).

2. Lampe tubulaire à semi-conducteur (1 ; 21 ; 31 ; 41 ; 51) selon la revendication 1, dans laquelle le tube (2 ; 22 ; 32 ; 42 ; 52) présente au moins deux zones de nopage (7, 8 ; 23, 24 ; 33, 34 ; 43-46 ; 53-56), lesquelles se trouvent en symétrie miroir par rapport à un plan (E) coupant longitudinalement le tube (2 ; 22 ; 32 ; 42 ; 52).

3. Lampe tubulaire à semi-conducteur (1) selon la revendication 2, dans laquelle les zones de nopage (7, 8) sont prévues pour mettre en contact exactement un côté plat (3) du circuit imprimé (5) et l'autre côté plat (4) repose sur une zone non déformée du tube (2).

4. Lampe tubulaire à semi-conducteur (31 ; 41 ; 51) selon la revendication 2, dans laquelle les zones de nopage (33, 34; 43-46; 53-56) sont prévues pour mettre en contact les deux côtés plats (3, 4) du circuit imprimé (5).

5. Lampe tubulaire à semi-conducteur (1 ; 21 ; 31 ; 41 ; 51) selon la revendication 1, dans laquelle les sections du tube (2 ; 22 ; 32 ; 42 ; 52) présentent les mêmes zones de nopage (7, 8 ; 23, 24 ; 33, 34 ; 43-46 ; 53-56).

6. Lampe tubulaire à semi-conducteur (1 ; 21 ; 31 ; 41 ; 51) selon l'une quelconque des revendications précédentes, dans laquelle une distance bord à bord (d) de zones de nopage (7, 8 ; 23, 24 ; 33, 34, 37 ; 43-46 ; 53-56) adjacentes correspond à au moins deux fois une épaisseur de paroi (w) du tube (2 ; 22 ; 32 ; 42 ; 52) non déformé.

7. Lampe tubulaire à semi-conducteur (21) selon l'une quelconque des revendications précédentes, dans laquelle
- la lampe tubulaire à semi-conducteur (21) présente un support en forme de double T (26), sur les côtés plats (27) opposés duquel repose respectivement au moins un circuit imprimé (5) et
- le support (26) est guidé au moyen de zones de nopage (23, 24) bombées vers l'intérieur en direction d'une pièce médiane (29) entre les côtés plats (27).

8. Lampe tubulaire à semi-conducteur (21) selon l'une quelconque des revendications précédentes, dans laquelle le circuit imprimé (5) est maintenu de manière longitudinalement déplaçable par les zones de nopage (7, 8; 23, 24; 33, 34; 43-46 ; 53-56).
